# FASCICULE DE BREVET EUROPEEN

(11) **EP 1 130 227 B1**
(45) Date de publication et mention de la délivrance du brevet: **23.03.2005**
(21) Numéro de dépôt: 01400106.9
(22) Date de dépôt: 15.01.2001
(51) Int. Cl.: F01N 3/023, F02D 41/40

(54) **"Système d'aide à la régénération d'un filtre à particules intégré dans une ligne d'échappement d'un moteur diesel de véhicule automobile"**
Vorrichtung zur Regenerierung eines Partikelfilters in einer selbstgezündeten Brennkraftmaschine
System to regenerate an exhaust particle filter in a diesel engine

(30) Priorité: 20.01.2000 FR 0000704
(43) Date de publication de la demande: 05.09.2001
(73) Titulaire: Peugeot Citroen Automobiles SA, 92200 Neuilly sur Seine (FR)
(72) Inventeur: Salvat, Olivier, 75010 Paris (FR); Le Tallec, Patrice, 78500 Sartrouville (FR)
(74) Mandataire: Habasque, Etienne Joel Jean-François

(56) Documents cités:
- DE-A- 19 746 855
- FR-A- 2 774 427
- US-A- 4 685 290
- US-A- 5 826 425
- LANGKABEL G I: "LA PLUS GRANDE INVENTION DEPUIS LE MOTEUR DIESEL" REVUE AUTOMOBILE,CH,HALLWAG S.A. BERNE, vol. 94, no. 19, 6 mai 1999 (1999-05-06), page 21 XP000825692 ISSN: 0035-0761
- PATENT ABSTRACTS OF JAPAN vol. 1996, no. 02, 29 février 1996 (1996-02-29) & JP 07 259533 A (NIPPON SOKEN INC), 9 octobre 1995 (1995-10-09)
- DIRECTION DE LA COMMUNICATION: "Particule Filter System" PEUGEOT PRESS RELEASE, [en ligne] 15 avril 1999 (1999-04-15), XP002148817 Extrait de l'Internet: <URL:www.psa.fr/presse/en_99018.html> [extrait le 2000-09-28]
- STAMATELOS A M: "A review of the effect of particulate traps on the efficiency of vehicle diesel engines" ENERGY CONVERSION AND MANAGEMENT,GB,ELSEVIER SCIENCE PUBLISHERS, OXFORD, vol. 38, no. 1, 1997, pages 83-99, XP004040036 ISSN: 0196-8904

## Description

La présente invention concerne un système d'aide à la régénération d'un filtre à particules intégré dans une ligne d'échappement d'un moteur Diesel de véhicule automobile.

On sait que la réduction des émissions polluantes liées au fonctionnement des moteurs des véhicules automobiles et en particulier des moteurs Diesel est un souci permanent des constructeurs.

Différents systèmes ont déjà été développés dans l'état de la technique pour réduire le niveau de ces émissions polluantes en particulier en utilisant un filtre à particules intégré dans la ligne d'échappement.

On pourra par exemple se reporter au document LANGKABEL G.I: LA PLUS GRANDE INVENTION DEPUIS LE MOTEUR DIESEL, REVUE AUTOMOBILE, CH, HALLWAG S.A. BERNE, volume 94, n° 19, 6 mai 1999 (1999-05-06), page 21, qui décrit un système conforme au préambule de la revendication 1.

Cependant, la gestion du fonctionnement de celui-ci et en particulier la gestion de sa régénération génère encore des difficultés.

Le but de l'invention est donc de les résoudre.

A cet effet, l'invention a pour objet un système d'aide à la régénération d'un filtre à particules intégré dans une ligne d'échappement d'un moteur Diesel de véhicule automobile, comportant différents organes associés au moteur, parmi lesquels :
- des moyens d'admission d'air dans le moteur,
- des moyens de recyclage de gaz d'échappement du moteur en entrée de celui-ci,
- un turbocompresseur,
- un catalyseur d'oxydation disposé en amont du filtre à particules dans la ligne d'échappement ;
- un système d'alimentation commune en carburant des cylindres du moteur, comportant des injecteurs à commande électrique, associés à ces cylindres,
- des moyens d'ajout au carburant d'un additif destiné à se déposer sur le filtre à particules pour abaisser la température de combustion des particules piégées dans celui-ci,
- des moyens d'acquisition d'informations relatives à différents paramètres de fonctionnement du moteur et des organes associés à celui-ci, caractérisé en ce qu'il comporte des moyens de contrôle du fonctionnement des moyens d'admission, des moyens de recyclage, du turbocompresseur et/ou du système d'alimentation pour contrôler le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et en ce que les moyens de contrôle sont associés à des moyens de détermination du niveau d'activité du catalyseur pour commuter le phasage et/ou la quantité de carburant injectée lors des injections multiples, entre des premières valeurs d'amorçage du catalyseur et des secondes valeurs d'entretien de cet amorçage.

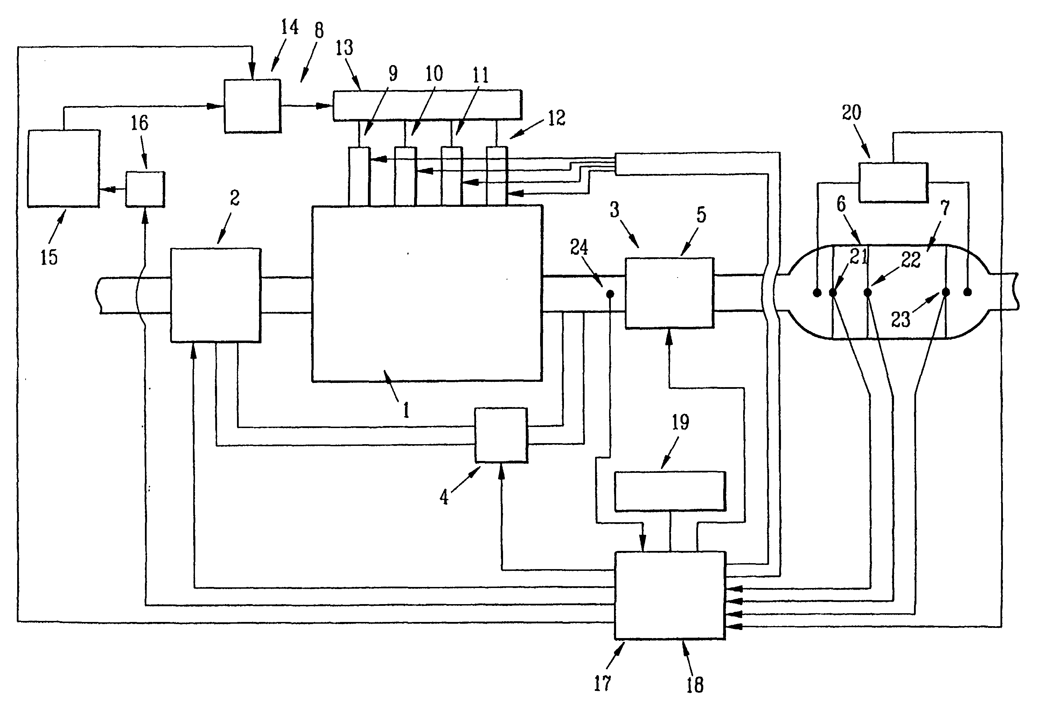

L'invention sera mieux comprise à la lecture de la description qui va suivre, donnée uniquement à titre d'exemple et faite en se référant au dessin annexé qui représente un schéma synoptique illustrant un moteur Diesel de véhicule automobile, et les différents organes associés à celui-ci ;

On a en effet représenté sur cette figure, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, disposé dans la ligne d 'échappement.

Le moteur est également associé à un système d'alimentation commune en carburant des cylindres de celui-ci. Ce système est désigné par la référence générale 8 sur cette figure et comporte par exemple des injecteurs à commande électrique associés à ces cylindres.

Dans l'exemple de réalisation représenté, le moteur est un moteur à quatre cylindres et comporte donc quatre injecteurs à commande électrique, respectivement 9,10,11 et 12.

Ces différents injecteurs sont associés à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15 pour permettre l'injection d'une certaine quantité de cet additif dans le carburant.

Enfin, ce moteur et les différents organes qui viennent d'être décrits sont également associés à des moyens de contrôle de leur fonctionnement désignés par la référence générale 17 sur cette figure, comprenant par exemple tout calculateur approprié 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour contrôler le fonctionnement du moteur et notamment le couple engendré par celui-ci en fonction des conditions de roulage du véhicule de façon classique.

C'est ainsi par exemple que ce calculateur est relié à un capteur de pression différentielle 20 aux bornes du catalyseur et du filtre à particules, respectivement 6 et 7, à des capteurs de température 21,22 et 23, respectivement en amont du catalyseur, entre ce catalyseur et le filtre à particules et en aval de ce filtre à particules dans la ligne d'échappement.

Le calculateur peut également recevoir une information de teneur en oxygène des gaz d'échappement à partir d'une sonde Lambda X désignée par la référence générale 24 sur cette figure, intégrée dans la ligne d'échappement.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Les moyens de contrôle 17 sont également associés à des moyens de détermination de l'état d'activation du catalyseur d'oxydation 6, pour, lors de la régénération du filtre, modifier les conditions de déroulement de la phase d'injections multiples de carburant dans les cylindres du moteur afin de basculer d'un premier état d'amorçage du catalyseur vers un second état d'entretien de celui-ci.

Ceci est par exemple réaliser en commutant le phasage et/ou la quantité de carburant injectée lors des injections multiples entre des premières valeurs d'amorçage du catalyseur 6 et des secondes valeurs d'entretien de cet amorçage.

Ceci permet alors de contrôler le fonctionnement du catalyseur afin de faciliter et de gérer la régénération du filtre à particules en permettant une augmentation de la température des gaz d'échappement du moteur dans un premier temps pour accélérer l'amorçage du catalyseur, puis en augmentant la teneur en hydrocarbure des gaz pour entretenir cet amorçage, dans un second temps.

Ceci peut par exemple être réalisé en contrôlant le phasage des injections qui sont alors relativement proches du point mort haut dans le premier état et relativement éloignées de celui-ci dans le second état.

L'état d'activation du catalyseur 6 peut être déterminé par le calculateur 18 par exemple à partir des informations délivrées par les capteurs de température 21 en entrée du catalyseur et 22 en sortie de celui-ci.

En effet, l'amorçage du catalyseur se caractérise par une température élevée en sortie du catalyseur, cette température pouvant alors être utilisée pour déterminer l'amorçage de celui-ci pour le calculateur 18.

## Revendications

1. Système d'aide à la régénération d'un filtre à particules intégré dans une ligne d'échappement d'un moteur Diesel de véhicule automobile, comportant différents organes associés au moteur parmi lesquels :
- des moyens (2) d'admission d'air dans le moteur,
- des moyens (4) de recyclage de gaz d'échappement du moteur en entrée de celui-ci,
- un turbocompresseur (5),
- un catalyseur d'oxydation (6) disposé en amont du filtre à particules (7) dans la ligne d'échappement ;
- un système (8) d'alimentation commune en carburant des cylindres du moteur, comportant des injecteurs à commande électrique (9,10,11,12), associés à ces cylindres,
- des moyens (16) d'ajout au carburant d'un additif destiné à se déposer sur le filtre à particules (7) pour abaisser la température de combustion des particules piégées dans celui-ci,
- des moyens (20,21,22,23,24) d'acquisition d'informations relatives à différents paramètres de fonctionnement du moteur et des organes associés à celui-ci, **caractérisé en ce qu'**il comporte des moyens (17) de contrôle du fonctionnement des moyens (2) d'admission, des moyens (4) de recyclage, du turbocompresseur (5) et/ou du système (8) d'alimentation pour contrôler le fonctionnement du moteur, ces moyens étant en outre adaptés pour déclencher une phase de régénération du filtre à particules (7) par combustion des particules piégées dans celui-ci en enclenchant une phase d'injections multiples de carburant dans les cylindres du moteur pendant leur phase de détente, et **en ce que** les moyens de contrôle (17) sont associés à des moyens (18,21,22) de détermination du niveau d'activité du catalyseur (6) pour commuter le phasage et/ou la quantité de carburant injectée lors des injections multiples, entre des premières valeurs d'amorçage du catalyseur et des secondes valeurs d'entretien de cet amorçage.

2. Système selon la revendication 1, **caractérisé en ce que** le niveau d'activité du catalyseur (6) est déterminé par un calculateur (18) de moyens de contrôle (17) à partir des informations de température délivrées par des capteurs (21,22) placés en amont du catalyseur et entre ce catalyseur (6) et le filtre à particules (7) respectivement.

## Patentansprüche

1. Vorrichtung zur Regeneration eines Partikelfilters, der in einer Abgasanlage eines Dieselmotors eines Kraftfahrzeugs eingebaut ist und unterschiedliche, mit dem Motor verbundene folgende Einrichtungen aufweist:
- Einrichtungen (2) zur Einströmung von Luft in den Motor,
- Einrichtungen (4) zur Rückführung des Motorabgases in seinen Einlass,
- einen Turbokompressor (5),
- einen Oxidationskatalysator (6), der in der Abgasleitung in Strömungsrichtung vor dem Partikelfilter (7) angeordnet ist,
- eine gemeinsame Kraftstoffversorgungsvorrichtung (8) der Motorzylinder mit elektrisch gesteuerten Einspritzventilen (9, 10, 11, 12), die mit diesen Zylindern in Verbindung stehen,
- Einrichtungen (16) zur Beimischung eines Additivs zum Kraftstoff, das zur Ablagerung in dem Partikelfilter (7) zur Senkung der Verbrennungstemperatur der in diesem aufgefangenen Partikel vorgesehen ist,
- Erfassungseinrichtungen (20, 21, 22, 23, 24) für Daten, die in Beziehung zu unterschiedlichen Parametern der Funktion des Motors und der mit diesem verbundenen Einrichtungen stehen,
**dadurch gekennzeichnet, dass** sie Steuereinrichtungen (17) der Funktion der Einrichtungen (2) zur Einströmung, der Einrichtungen (4) zur Rückführung, des Turbokompressors (5) und/oder der Versorgungsvorrichtung (8) zur Steuerung der Funktion des Motor aufweist, wobei diese Einrichtungen darüber hinaus zur Auslösung einer Regenerationsphase des Partikelfilters (7) zur Verbrennung der in diesem aufgefangenen Partikel zur Auslösung einer Phase von mehrfachen Einspritzungen von Kraftstoff in die Motorzylinder während ihres Expansionstakts angcpasst sind, und dass die Steuereinrichtungen (17) mit Einrichtungen (18, 21, 22) zur Festlegung des Aktivierungsniveaus des Katalysators (6) in Verbindung stehen, um den Zeitpunkt bzw. die Synchronisation und/oder die Menge des eingespritzten Kraftstoffs bei den mehrfachen Einspritzungen zwischen ersten Werten zur Auslösung der Betriebsbereitschaft bzw. zum Einsatz des Katalysators und zweiten Werten zur Aufrechterhaltung dieser Betriebsbereitschaft umzuschalten.

2. Vorrichtung nach Anspruch 1, **dadurch gekennzeichnet, dass** das Aktivierungsniveau des Katalysators (6) durch einen Rechner (18) der Steuereinrichtungen (17) auf Grund von von Gebern (21, 22) gelieferten Temperaturdaten festgelegt ist, die jeweils in Strömungsrichtung vor dem Katalysator und zwischen diesem Katalysator (6) und dem Partikelfilter (7) angeordnet sind.

## Claims

1. System to help with the regeneration of a particle filter integrated into the exhaust system of
the diesel engine of a motor vehicle, comprising different components associated with the engine, including:
- means (2) for admitting air into the engine,
- means (4) for recycling exhaust gases from the engine at the input to the same,
- a turbo-compressor (5),
- an oxidation catalyst (6) positioned above the particle filter (7) in the exhaust system;
- a common fuel feed system (8) for the engine cylinders, comprising electrically controlled injectors (9, 10, 11, 12) associated with these cylinders,
- means (16) for adding an additive to the fuel, intended to fix itself onto the particle filter (7) in order to lower the combustion temperature of the particles trapped in the same,
- means (20, 21, 22, 23, 24) for acquiring information relating to different functional parameters for the engine and for the components associated with the same, **characterised in that** it comprises means (17) of controlling the function of the means of admission (21), the means of recycling (4), the turbo-compressor (5) and/or the feed system (8) in order to control the function of the engine, these means , moreover, being adapted to set in motion a regeneration phase of the particle filter (7) by combustion of the particles trapped in the same, by starting a phase of multiple injections of fuel in the engine cylinders during their rest phase, and **in that** the means for control (17) are associated with means (18, 21, 22) of determining the level of activity of the catalyst (6) in order to switch the phasing and/or the quantity of fuel injected at the time of the multiple injections, between the first values for priming the catalyst, and the second values for maintaining this priming.

2. System in accordance with claim 1, **characterised in that** the level of activity of the catalyst (6)
is determined by a computer (18) for means of control (17) based upon information with regard to temperature provided by sensors (21, 22) positioned above the catalyst and between this catalyst (6) and the particle filter (7) respectively.
